(19) 

Europäisches
Patentamt
European
Patent Office
Office européen
des brevets

(11) **EP 4 212 943 B1**

(12) **EUROPEAN PATENT SPECIFICATION**

(45) Date of publication and mention
of the grant of the patent:
**14.05.2025 Bulletin 2025/20**

(21) Application number: **21953028.4**

(22) Date of filing: **21.12.2021**

(51) International Patent Classification (IPC):
**G02B 27/01** *(2006.01)*    **G02B 3/00** *(2006.01)*
**G02B 9/12** *(2006.01)*    **G02B 13/00** *(2006.01)*

(52) Cooperative Patent Classification (CPC):
**G02B 13/0035; G02B 27/0101; G02B 27/0172;**
G02B 9/12; G02B 2003/0093

(86) International application number:
**PCT/CN2021/139986**

(87) International publication number:
**WO 2023/097811 (08.06.2023 Gazette 2023/23)**

(54) **OPTICAL SYSTEM AND HEAD-MOUNTED DISPLAY DEVICE**

OPTISCHES SYSTEM UND KOPFMONTIERTE ANZEIGEVORRICHTUNG

SYSTÈME OPTIQUE ET DISPOSITIF D'AFFICHAGE MONTÉ SUR LA TÊTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2021 CN 202111446819**

(43) Date of publication of application:
**19.07.2023 Bulletin 2023/29**

(73) Proprietor: **Goertek Optical Technology Co., Ltd.**
**Shandong 261031 (CN)**

(72) Inventors:
• **SUN, Qi**
**Weifang, Shandong 261031 (CN)**

• **ZHAO, Bogang**
**Weifang, Shandong 261031 (CN)**

(74) Representative: **Schwarz & Partner Patentanwälte
GmbH
Patentanwälte
Wipplingerstraße 30
1010 Wien (AT)**

(56) References cited:
**CN-A- 102 902 058    CN-A- 104 536 129
CN-A- 106 338 820    CN-A- 106 405 817
CN-A- 108 474 935    CN-A- 111 868 603
CN-A- 112 630 973    CN-A- 112 630 974
CN-A- 112 630 977    CN-U- 213 934 402
JP-A- 2020 030 383**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to Chinese patent application No. 202111446819.7 filed with the China Patent Office on November 30, 2021.

TECHNICAL FIELD

The present disclosure belongs to the technical field of optical imaging, more specifically, it relates to an optical system and a head mounted display.

BACKGROUND

In recent years, augmented reality (AR) technology and virtual reality (VR) technology have been applied in intelligent wearable devices and developed rapidly. The core component of both the augmented reality technology and the virtual reality technology is the display optical system. The display effect of the display optical system will directly determine the quality of intelligent wearable devices. At present, intelligent wearable devices also need to meet the requirements of miniaturization and lightweight, and there are also similar requirements for the display optical system.

In the prior art, take VR devices as an example, most conventional VR devices use a display optical system obtained by combining a single lens with a display screen. However, due to the optical path imaging requirements, the lens will be far away from the display screen, which leads to the large size of the VR device and is not conducive to the miniaturization of the product, and may lead to poor use experience when the user wears the VR device. In addition, there are also conventional VR devices adapting a solution of folded optical path. Although this solution can realize the miniaturization and lightweight of VR devices, it has the problems of high production cost, low light efficiency (<25%) and ghosting.

Therefore, there is an urgent need to make new improvements on conventional display optical systems.

SUMMARY

The object of the present disclosure is to provide a new technical solution of an optical system and a head mounted display.

According to an aspect of the present disclosure, an optical system is provided. The optical system comprises:

a lens group comprising a third lens, a second lens and a first lens arranged successively along a propagation direction of incident light;
wherein in the lens group, there are two Fresnel surfaces arranged adjacent to each other; and
the optical system has an imaging spot size less than $50 \mu m$.

A first spacing T1 is provided between the first lens and the second lens;

a second spacing T2 is provided between the third lens and the second lens, and the second spacing T2 is greater than the first spacing T1; and
the first lens, the second lens and the third lens are located on a same optical axis.

The first lens and the second lens both have positive focal powers.

Two adjacent surfaces of the first lens and the second lens are Fresnel surfaces.

The first lens comprises a first surface and a second surface, and the second lens comprises a third surface and a fourth surface;

the second surface and the third surface are arranged adjacent to each other, and are both Fresnel surfaces; and
the first surface and the fourth surface are both aspherical surfaces.

The third lens comprises a fifth surface and a sixth surface;

the fifth surface and the fourth surface are arranged adjacent to each other; and
at least one of the fifth surface and the sixth surface is an aspherical surface.

The third lens has a negative focal power.

Optionally, the first lens and the second lens are made of a same material, and are made of a COP material; and

the third lens is made of an OKP material or an EP material.

An effective focal length f1 of the first lens is 20mm ≤ f1 ≤ 40mm;

an effective focal length f2 of the second lens is 20mm ≤ f2 ≤ 40mm;

an effective focal length f3 of the third lens is -75mm ≤ f3 ≤ -35mm.

Optionally, an effective focal length f of the lens group is 15mm ≤ f ≤ 25mm.

According to another aspect of the present disclosure, a head mounted display is provided. The head mounted display comprises an optical system as described above.

The beneficial effects of the present disclosure are as follows.

In the solutions according to the embodiments of the present disclosure, by using three lenses to form a lens group (3P structure), designing two adjacent Fresnel surfaces in the optical path structure, and cooperating with a lens close to the incident light side, the low dispersion and short-focus of the optical path can be realized, and the optical system obtained has high light efficiency and can achieve high-resolution imaging. The embodiments of the present disclosure propose a design of short-focus, high-resolution, direct transmission optical path structure. The optical system obtained can be applied in, for example, head mounted displays (such as VR devices), and facilitates the miniaturization and lightweight of head mounted displays.

By the following detailed description of the exemplary embodiments of the present disclosure with reference to the accompanying drawings, other features and advantages of the present disclosure will become clear.

BRIEF DESCRIPTION OF DRAWINGS

In order to more clearly illustrate the technical solutions in the embodiments of the present disclosure or the prior art, drawings necessary for describing the embodiments or the prior art will be briefly introduced below. Obviously, the drawings in the following description are only a part of the drawings of the present disclosure. For a person of ordinary skill in the art, other drawings can be obtained based on the drawings provided without paying creative efforts.

FIG. 1 is a schematic diagram of the structure of an optical system according to an embodiment of the present disclosure;

FIG. 2 is a schematic diagram of the imaging principle of an optical system according to an embodiment of the present disclosure;

FIG. 3 is a spot diagram of an optical system according to a first embodiment of the present disclosure;

FIG. 4 is a field curvature and distortion diagram of an optical system according to the first embodiment of the present disclosure;

FIG. 5 is a dispersion diagram of an optical system according to the first embodiment of the present disclosure;

FIG. 6 is a schematic diagram of the imaging principle of an optical system according to a second embodiment of the present disclosure;

FIG. 7 is a spot diagram of an optical system according to a second embodiment of the present disclosure;

FIG. 8 is a field curvature and distortion diagram of an optical system according to the second embodiment of the present disclosure; and

FIG. 9 is a dispersion diagram of an optical system according to the second embodiment of the present disclosure.

In the drawings: 1. display screen; 2. first lens; 3. second lens; 4. third lens; 21. first surface; 22. second surface; 31. third surface; 32. fourth surface; 41. fifth surface; 42. sixth surface.

DETAILED DESCRIPTION

The technical solutions in embodiments of the present disclosure will be described clearly and completely below with reference to the drawings in the embodiments of the present disclosure. Obviously, the embodiments as described below are merely part of, rather than all, embodiments of the present disclosure. Based on the embodiments of the present disclosure, any other embodiment obtained by a person of ordinary skill in the art without paying any creative effort shall fall within the protection scope of the present disclosure.

The following description of at least one exemplary embodiment is in fact only illustrative, and in no way serves as any restriction on the present disclosure and its application or use.

The techniques, methods and equipment known to a person of ordinary skill in the art may not be discussed in detail, but in appropriate cases, these techniques, methods and equipment shall be considered as a part of the specification.

In all the examples shown and discussed herein, any specific value should be interpreted as merely illustrative and not as a limitation. Therefore, other examples of the exemplary embodiments may have different values.

It should be noted that similar reference numerals and letters denote similar items in the following drawings. Therefore, once an item is defined in one drawing, it does not need to be further discussed in the subsequent drawings.

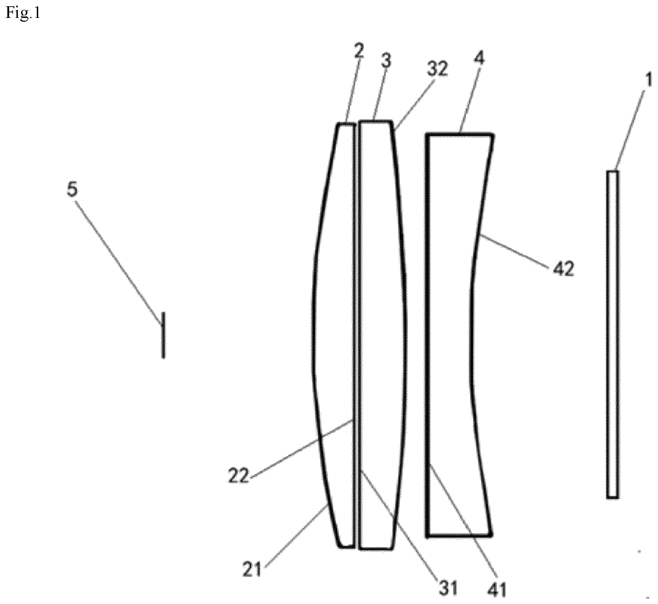

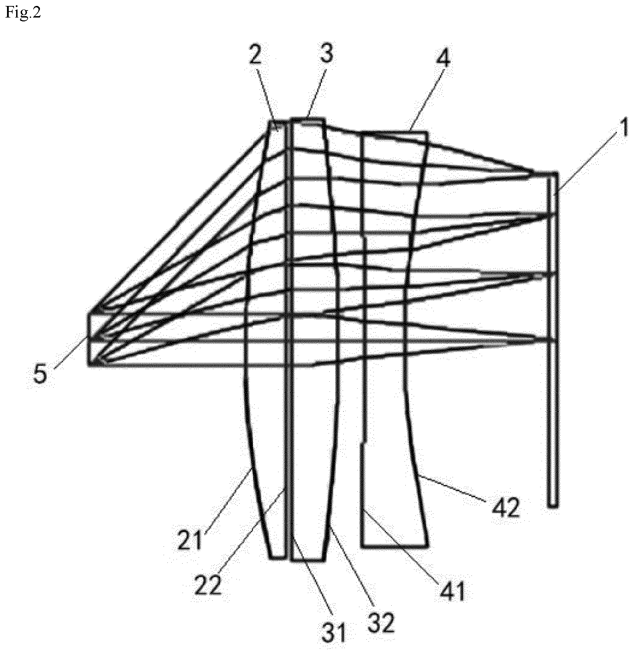

The optical systems and the head mounted displays according to embodiments of the present disclosure will be described in detail below with reference to FIGS. 1 and 2.

According to an aspect of the present disclosure, an optical system is provided. The optical system is a short-focus, high-resolution, direct transmission optical system, which is suitable for application in electronic devices, for example, head mounted displays (HMD) such as VR devices (such as VR glasses or VR helmets). It has a good application prospect.

The optical system according to an embodiment of the present disclosure, as shown in FIGS. 1 and 2, comprises a lens group, which is composed of a third lens 4, a second lens 3 and a first lens 2 arranged successively along the propagation direction of the incident light. In the lens group, there are two Fresnel surfaces arranged adjacent to each other; the optical system has an imaging spot size less than $50\mu m$.

The optical system according to the embodiment of the present disclosure has a direct transmission optical path structure, and the design of optical path structure is relatively simple.

It should be noted that the optical system may also comprise a display screen 1. In the optical path structure, the display screen 1 can be used to emit light, i.e., the above incident light.

That is to say, in the optical system according to the embodiment of the present disclosure, a lens group comprising three lenses is designed. The lens group is arranged at a light exit side of the display screen 1 (specifically, in the propagation direction of the light emitted from the display screen 1), and can be used to project the incident light into the human eye 5 for imaging.

In the optical system of the embodiment of the present disclosure, the imaging spot size is less than $50\mu m$. Because the spot size is relatively small, the imaging quality of the entire optical system is good (in fact, the smaller the spot size, the better the imaging effect of the optical system).

The spot size is all less than two display pixels. It is helpful for the final realization of magnification display of the PPI1000+ display optical system.

In the solution according to the embodiment of the present disclosure, by using three lenses to form a lens group (3P structure), designing two adjacent Fresnel surfaces in the optical path structure, and cooperating with a lens close to the incident light side, the low dispersion and short-focus of the optical path can be realized, and the optical system obtained has high light efficiency and can achieve high-resolution imaging.

The embodiment of the present disclosure proposes a design of short-focus, high-resolution, direct transmission optical path structure. The optical system obtained can be applied in, for example, head mounted displays (such as VR devices), and facilitates the miniaturization and lightweight of head mounted displays.

In addition, the optical system solution according to the embodiment of the present disclosure is lower in processing difficulty and production cost than the conventional solution of folded optical path.

In sum, the solution according to the embodiment of the present disclosure overcomes the problems caused by the conventional combination solution of one-piece lens plus display screen, i.e., the lens is far away from the display screen, which leads to the larger size of the VR device and is not conducive to the miniaturization of the product; moreover, the light efficiency is low. At the same time, it can also overcome the defects caused by using folded optical path, and has relatively low processing difficulty and production cost; the direct transmission optical structure is also simpler than the folded optical path.

As shown in FIGS. 1 and 2, the optical system of the embodiment of the present disclosure also comprises a display screen 1, for example, which is high PPI (for example, 1.4 inch, pixel size $24\mu m$). On this basis, the conventional one-piece lens (1P) structure or two-piece lens (2P) structure is not enough to distinguish this type of display screen. The reason is as follows.

The one-piece lens (1P) structure only has two surfaces for optimization of surface freedom, its convergence ability is limited, and the aberration or chromatic aberration cannot be corrected. The pixel size (i.e., spot size) that can be distinguished in the whole field of view is about $80\mu m$ to $100\mu m$. More importantly, it cannot realize short-focus.

The two-piece lens (2P) structure increases the surface freedom of lens surface for optimization and can realize short-focus, but it still has the limitation of resolution. Its pixel size (i.e., spot size) that can be distinguished in the whole field of view is about $60\mu m$ to $80\mu m$, and the imaging effect is poor.

However, in the solution according to the embodiment of the present disclosure, the three-piece lens (3P) structure is adopted, which can further improve the resolution of the pixel and correct the chromatic aberration to a certain extent. The spot size of the optical system is less than $50\mu m$. The lens group formed by the three-piece lens (3P) structure has a short focus. Considering the air gap and short-focus in the optical structure, two adjacent Fresnel surfaces are also designed. In addition, considering the influence of chromatic aberration, the third lens 4 is used to eliminate chromatic aberration.

In some examples of the present disclosure, as shown in FIGS. 1 and 2, a first spacing T1 is provided between the first lens 2 and the second lens 3; a second spacing T2 is provided between the third lens 4 and the second lens 3, and the second spacing T2 is greater than the first spacing T1. The first lens 2, the second lens 3 and the third lens 4 are located on the same optical axis.

In the embodiment of the present disclosure, a narrow air gap is provided between the first lens 2 and the second lens 3; at the same time, a narrow air gap is also provided between the second lens 3 and the third lens 4. By optimizing the air gaps between the lenses, it facilitates realizing the miniaturization of the entire optical system.

The first spacing T1 is set to $0.2mm \leq T1 \leq 1mm$, the second spacing T2 is set to $1mm \leq T2 \leq 3mm$, and the second spacing T2 is greater than the first spacing T1.

It can be seen from the above spacing values that narrow air gaps of reasonable values are formed between the first lens 2 and the second lens 3, and between the second lens 3 and the third lens 4, so that the optical system obtained can better realize ultra-short-focus and high resolution.

Moreover, after the spacings between lenses in the lens group are reasonably arranged, the value of the spacing between the third lens 4 and the display screen 1 should also be considered.

A third spacing T3 is provided between the third lens 4 and the display screen 1.

The third spacing T3 is set to $5mm \leq T3 \leq 15mm$.

In some examples of the present disclosure, as shown in FIGS. 1 and 2, the first lens 2 and the second lens 3 both have positive focal powers.

That is, for example, the first lens 2 and the second lens 3 are both designed as positive lenses.

In some examples of the present disclosure, as shown in FIGS. 1 and 2, the two adjacent faces of the first lens 2 and the second lens 3 are Fresnel faces.

By designing two adjacent Fresnel surfaces in the optical structure, it facilitates reducing stray light.

In some examples of the present disclosure, as shown in FIGS. 1 and 2, the first lens 2 comprises a first surface 21 and a second surface 22, and the second lens 3 comprises a third surface 31 and a fourth surface 32.

The second surface 22 and the third surface 31 are arranged adjacent to each other, and are both Fresnel surfaces.

The first surface 21 and the fourth surface 32 are both aspherical surfaces.

In the optical system according to the embodiment of the present disclosure, as shown in FIGS. 1 and 2, the first surface 21 of the first lens 2 directly faces the human eye 5 and is located externally. The first surface 21 is set as an aspherical surface (such as a convex surface), for example. The second surface 22 of the first lens 2 is set as a Fresnel surface. In this way, the first lens 2 (positive lens) has a combined surface shape of two surface shapes: aspherical surface + Fresnel surface.

Optionally, the first surface 21 and the second surface 22 of the first lens 2 are respectively plated with an anti-reflection (AR) film.

After the two surfaces of the first lens 2 are respectively plated with an anti-reflection film, the reflected light can be reduced by the anti-reflection films, thereby increasing the transmissivity of light on the two surfaces of the first lens 2.

Optionally, the first surface 21 of the first lens 2 may be plated with a hardened film in addition to the anti-reflection film.

The reason is that the first surface 21 of the first lens 2 faces outward and needs to avoid scratches, collisions and other damages. The service life of the first lens 2 can be improved by plating the hardened film. The hardness and strength of the first surface 21 can be improved by plating the hardened film on the first surface 21 (i.e., hardening the first surface 21). This is beneficial to improve the service life of the entire optical system.

Of course, in the embodiments of the present disclosure, it is not limited to the first surface 21 of the first lens 2 that is plated with a hardened film, the second surface 22 of the first lens 2 may also be plated with a hardened film. Those skilled in the art can flexibly adjust according to specific needs, and the present disclosure has not a particular limitation herein.

In addition, in the embodiment of the present disclosure, the first lens 2 may further have the following parameters.

The absolute value of the radius R1 of the first surface 21 of the first lens 2 satisfies $35mm \leq R1 \leq 65mm$; the absolute value of the radius R2 of the second surface 22 of the first lens 2 satisfies $20mm \leq R2 \leq 40mm$; the absolute value of the conic constant K1 of the first surface 21 and the second surface 22 of the first lens 2 satisfies $K1 \leq 20$.

The surface shape of the first surface 21 is different from that of the second surface 22.

Specifically, the first surface 21 facing outward is designed as an aspherical surface (such as a convex surface), while the second surface 22 is designed as a Fresnel surface. When the first lens 2 formed by combining the Fresnel surface and the aspherical surface is used in the optical path structure, it facilitates realizing short-focus and high resolution.

In the embodiment of the present disclosure, after optimizing the surface shape of the first lens 2, if the processing difficulty and cost are considered, more preferably, the value of the conic constant (i.e., K1) of the first lens 2 is, for example, within [-10, 10], and the radius R of the Fresnel surface of the first lens 2 is greater than 23mm.

In some examples of the present disclosure, the second lens 3 and the first lens 2 may have the same combination form of surface shapes, and a narrow air gap is maintained between them.

For example, the third surface 31 of the second lens 3 is a Fresnel surface, and the fourth surface 32 of the second lens 3 is an aspherical surface such as a convex surface.

The second lens 3 which is a positive lens is located between the first lens 2 and the third lens 4, and is closer to the first lens 2. The combination of the first lens 2 and the second lens 3 can form a positive lens group, which can provide a large focal power for the entire optical path structure.

Optionally, the third surface 31 and the fourth surface 32 are also plated with an anti-reflection film.

The reflection light is reduced by the anti-reflection films, thereby increasing the transmissivity of light on the two surfaces of the second lens 3.

In addition, in the embodiment of the present disclosure, the second lens 3 may further have the following parameters.

In some examples of the present disclosure, the absolute value of the radius R3 of the third surface 31 of the second lens 3 satisfies $20mm \leq R3 \leq 40mm$; the absolute value of the radius R4 of the fourth surface 32 of the second lens 3 satisfies $30mm \leq R4 \leq 60mm$; the absolute value of the conic constant K2 of the third surface 31 and the fourth surface 32 of the second lens 3 satisfies $K2 \leq 20$.

In the embodiment of the present disclosure, after optimizing the surface shape of the second lens 3, if the processing difficulty and cost are considered, more preferably, the value of the conic constant (i.e., K2) of the second lens 3 is, for example, within [-10, 10], and the radius R of the Fresnel surface of the second lens 3 is greater than 23mm. This is substantially the same as the first lens 2.

It should be noted that the first lens 2 and the second lens 3 both have Fresnel surfaces. Considering the processing of lens surface shape, it is necessary to set the surface parameter within a certain range, otherwise the processing accuracy will be low or the cutter may break (this is because the tooth shape processing is difficult, and if the acute angle of the tooth shape is smaller, the processing angle and action will be more difficult). Because of this, it is preferable to set the conic constant K value within the range of [-10, 10], and the R value of the Fresnel surface of each lens is greater than 23mm.

In the solution of the embodiment of the present disclosure, the two positive lenses, i.e., the first lens 2 and the second lens 3, both take the combination form of aspherical surface (such as convex surface) + Fresnel surface, and realize low dispersion and short-focus of the optical path structure based on the selection and cooperation of materials having different refractive indexes and Abbe numbers.

In some examples of the present disclosure, as shown in FIGS. 1 and 2, the third lens 4 comprises a fifth surface 41 and a sixth surface 42; the fifth surface 41 and the fourth surface 32 are arranged adjacent to each other. At least one of the fifth surface 41 and the sixth surface 42 is an aspherical surface.

For example, the third lens 4 has a negative focal power.

The third lens 4 is a negative lens which is thin at the center and thick at the edge and has the ability to emit light. In the entire optical path structure, the third lens 4 can be used to eliminate chromatic aberration.

For example, the third lens 4 may be a biconcave lens (i.e., both surfaces are concave) or a plano-concave lens (i.e., one surface is concave and the other surface is flat).

More preferably, the fifth surface 41 is a flat surface, and the sixth surface 42 is a concave surface. That is, in the optical path structure, the face adjacent to the fourth surface 32 is a flat surface, and the face adjacent to the display screen 1 is a concave surface.

In addition, in the embodiment of the present disclosure, the third lens 4 may further have the following parameters.

For example, the absolute value of the radius R5 of the fifth surface 41 of the third lens 4 satisfies $R5 \geq 30mm$; the absolute value of R6 of radius 42 on the sixth surface of the third lens 4 satisfies $30mm \leq R6 \leq 60mm$; the absolute value of the conic constants K3 of the fifth surface 41 and the sixth surface 42 of the third lens 4 satisfy $K3 \leq 10$.

Optionally, the fifth surface 41 and the sixth surface 42 are both plated with an anti-reflection film.

After the two surfaces of the third lens 4 are respectively plated with an anti-reflection film, the reflection light can be reduced by the anti-reflection films to increase the transmissivity of light on the two surfaces of the third lens 4.

In a specific example of the present disclosure, as shown in FIG. 1, the optical system comprises: a display screen 1 and a lens group formed by the first lens 2, the second lens 3 and the third lens 4. The display screen 1 acts as a display light source and can emit light. The light can enter the lens group as the incident light. The first lens 2 and the second lens 3 are both positive lenses, and both take the combination form of aspherical surface + Fresnel surface; the third lens 4 is a negative lens. Each surface of the three lenses is plated with an anti-reflective film, and the first surface 21 of the first lens 2 is plated with a hardened film and an anti-reflective film.

On this basis, as shown in FIG. 2, the imaging beam (light) emitted by the display screen 1 passes through the sixth surface 42 of the third lens 4 plated with an anti-reflection film, and enters the interior of the third lens 4. The light passing through the third lens 4 is diverged and enters the second lens 3. Two surfaces of the second lens 3 are also both plated with an anti-reflection film, and the second lens 3 is a positive lens. In this way, the light is converged after passing through the second lens 3, and then enters the first lens 2. The first lens 2 is also a converging positive lens. After passing through the first lens 2, the light enters the human eye 5 for imaging. There is no optical path folding in the entire optical system, and the surface of each lens is plated with an anti-reflection film, so the light transmission efficiency is high.

In some examples of the present disclosure, the first lens 2 and the second lens 3 are made of the same material, and both are made of COP materials; the third lens 4 is made of OKP material or EP material.

COP materials, OKP materials and EP materials are all light transmitting resin materials with light weight. By using these materials to make lenses, the weight of lens groups can be reduced and thus light weight can be realized.

For material selection of each lens, based on the consideration of short-focus and chromatic aberration, the combinations of materials having high refractive indexes and high/low Abbe numbers are selected for design optimization.

In addition, those skilled in the art can reasonably select the materials of the first lens 2, the second lens 3 and the third lens 4 according to actual needs, which is not limited to the above types of materials.

In some examples of the present disclosure, the thickness h1 at the center of the first lens 2 is $2mm \leq h1 \leq 4mm$; the thickness h2 at the center of the second lens 3 is $3mm \leq h2 \leq 5mm$; the thickness h3 at the center of the third lens 4 is $2mm \leq h3 \leq 4mm$.

In some examples of the present disclosure, the effective focal length f1 of the first lens 2 is $20mm \leq f1 \leq 40mm$; the effective focal length f2 of the second lens 3 is $20mm \leq f2 \leq 40mm$; the effective focal length f3 of the third lens 4 is $-75mm \leq f3 \leq -35mm$.

The effective focal length f1 of the first lens 2 and the effective focal length f2 of the second lens 3 are both greater than the effective focal length f of the lens group.

The sum of the effective focal length f1 of the first lens 2 and the effective focal length f2 of the second lens 3 is greater than the absolute value of the effective focal length f3 of the third lens 4.

The effective focal length f of the lens group satisfies $15mm \leq f \leq 25mm$.

The present disclosure provides a short-focus optical system. There is no optical path folding in the entire optical system. It is a direct transmission optical system that can achieve high-resolution imaging.

The following is an application example of the solution according to an embodiment of the present disclosure:

(1) A 90 degree field of view is realized in 1.4 inch display screen 1.
(2) The distortion is less than 34.6%, and the field curvature is less than 0.5mm.
(3) The chromatic aberration is less than 178μm. The virtual image distance is 1500mm.
(4) The spot sizes at 0 to 1.0F are all less than two display pixels, realizing clear imaging in visible light band (450nm to 630nm).
(5) The effective focal length of the system is 19.2mm.

First Embodiment

The first embodiment provides an optical system, and the structure parameters in the optical system are shown in Table 1 below.

Table 1 lists the optical surface numbers that are numbered sequentially from the human eye 5 (diaphragm) to the display screen 1, the curvature (C) of each optical surface on the optical axis, the distance (T) between each optical surface and the next optical surface on the optical axis from the human eye 5 (diaphragm) to the display screen 1, and even aspheric coefficients $\alpha_2$, $\alpha_3$, $\alpha_4$.

The aspheric coefficients can satisfy the following equation:

$$z = \frac{CY^2}{1 + \sqrt{1 - (1 + k)C^2Y^2}} + \sum_{i=2}^{N} \alpha_i Y^{2i} \qquad (1)$$

In equation (1), z is a coordinate along the optical axis, Y is a radial coordinate in the unit of lens length, C is the curvature (1/R), and K is the conic constant, $\alpha_i$ is the coefficient of each higher-order term, and 2i is the order of aspheric coefficient.

In the solution of the present disclosure, considering the smoothness of the field curve, there is no high order spheric coefficient designed to be 4th order.

Table 1

| Surf | Type | Radius | Thickness | GLASS | Clear Diam | Mech Diam | Conic | 4th | 6th |
|------|------|--------|-----------|-------|------------|-----------|-------|-----|-----|
| OBJ | STANDARD | Infinity | -1500 | | 3000 | 3000 | 0 | | |
| STO | STANDARD | Infinity | 12 | | 4 | 4 | 0 | | |
| 2 | EVENASPH | 45 | 3.038877 | K26R | 31.82877 | 32.98539 | -5.517374 | -3.2592E-06 | -2.7835E-08 |
| 3 | FRESNELS | -23.9999 | 0.4997432 | | 32.98539 | 32.98539 | -0.7734803 | 8.7502E-06 | -5.9717E-08 |
| 4 | FRESNELS | 25.99997 | 3.500776 | K26R | 33.26769 | 33.26769 | -0.323913 | 7.4356E-06 | 1.7866E-08 |
| 5 | EVENASPH | -40.60213 | 2.00001 | | 32.41833 | 32.41833 | -10.00002 | 9.4459E-06 | 3.7162E-08 |
| 6 | EVENASPH | -249.9341 | 2.998851 | OKP-1 | 31.20744 | 31.20744 | -9.998243 | -3.1138E-06 | 2.5098E-08 |
| 7 | EVENASPH | 42.51078 | 10.96698 | | 29.83988 | 31.20744 | 0.4596061 | 1.4856E-07 | -9.5921E-08 |
| 8 | STANDARD | Infinity | 0.45 | BK7 | 25.30191 | 25.30724 | 0 | | |
| 9 | STANDARD | Infinity | 0.0999886 | | 25.30724 | 25.30724 | 0 | | |
| IMA | STANDARD | Infinity | | | 25.12076 | 25.12076 | 0 | | |

The performance of the optical system according to the first embodiment of the present disclosure is demonstrated by the following parameters.

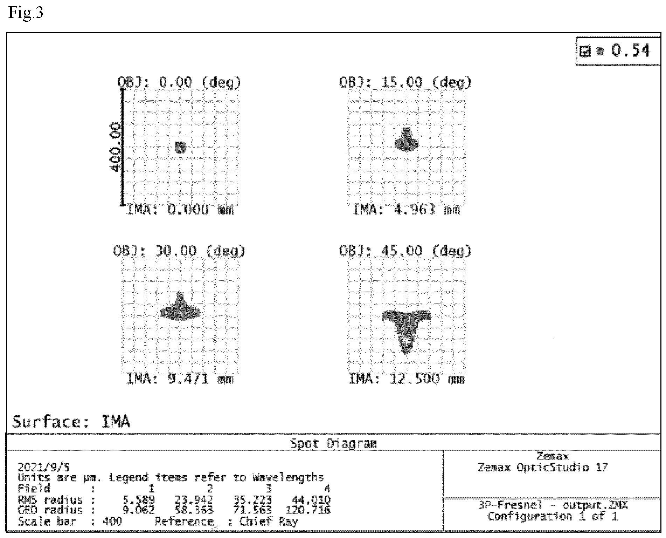

As shown in FIG. 3, the maximum spot size is at the position of the maximum field of view (1.0F), and its maximum value is less than 44μm. This value is relatively small, which is conducive to improving the imaging quality.

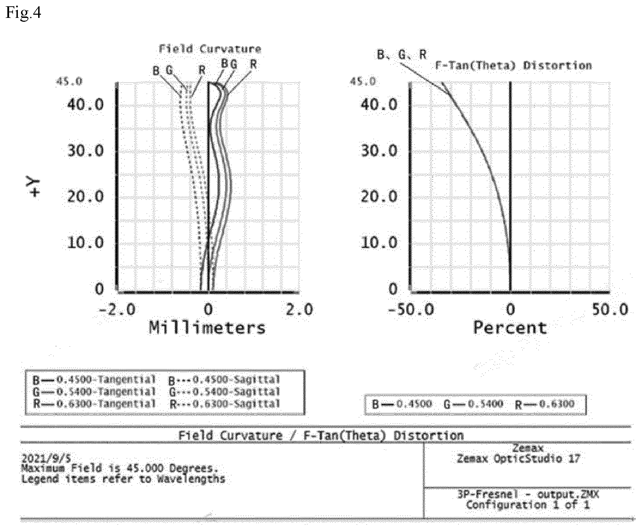

As shown in FIG. 4, the field curvatures of RGB wavelengths in T and S directions are less than 0.5mm, and the maximum distortion is at the position of the maximum field of view and is less than 34.6%.

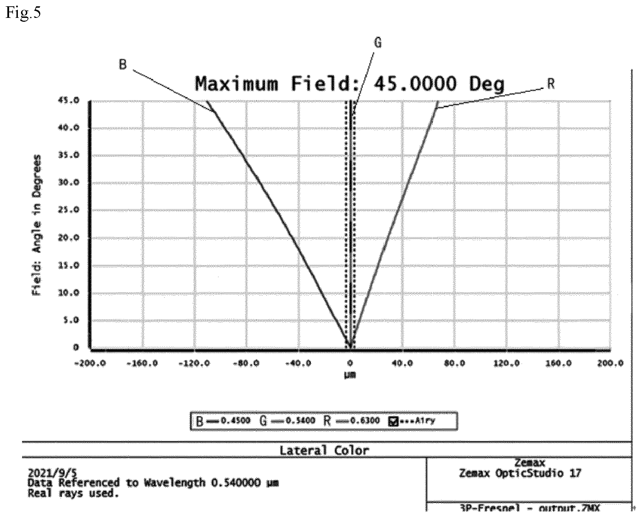

As shown in FIG. 5, the maximum dispersion of RGB wavelengths is at the position of the maximum field of view, the whole RGB is 450nm to 610nm, and the LCA is 178nm.

Second Embodiment

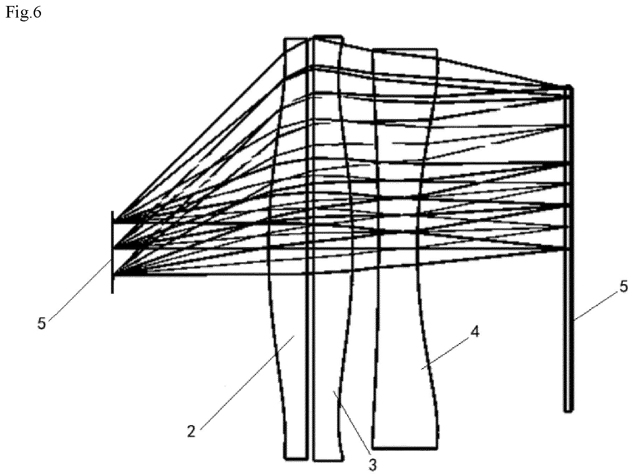

The second embodiment provides an optical system. The structural parameters of the optical system are shown in Table 2 below. The optical system is shown in FIG. 6. Table 2 lists the optical surface numbers that are numbered sequentially from the human eye 5 (diaphragm) to the display screen 1, the curvature (C) of each optical surface on the optical axis, the distance (T) between each optical surface and the next optical surface on the optical axis from the human eye 5 (diaphragm) to the display screen 1, and even aspheric coefficients $\alpha_2$, $\alpha_3$, $\alpha_4$.

Table 2

| Surf | Type | Radius | Thickness | GLASS | Clear Diam | Mech Diam | Conic | 4th | 6th |
|---|---|---|---|---|---|---|---|---|---|
| OBJ | STANDARD | Infinity | -1500 | | 3000 | 3000 | 0 | | |
| STO | STANDARD | Infinity | 12 | | 4 | 4 | 0 | | |
| 2 | EVENASPH | 47.89796 | 2.999817 | K26R | 30.72927 | 32.59148 | -9.999941 | -4.25012E-06 | -4.1728E-08 |
| 3 | FRESNELS | -23.99987 | 0.499888 | | 32.59148 | 32.59148 | -2.533428 | 5.96725E-06 | -9.6153E-08 |
| 4 | FRESNELS | 26.50084 | 2.999886 | K26R | 32.91752 | 32.91752 | -0.09258337 | 1.69338E-05 | 1.52413E-08 |
| 5 | EVENASPH | -45.22382 | 1.997121 | | 31.97075 | 31.97075 | -10 | 7.56065E-06 | 5.9383E-08 |
| 6 | EVENASPH | -221.8466 | 2.998931 | OKP-1 | 30.9888 | 30.9888 | 8.235414 | -2.26842E-06 | 1.43049E-08 |
| 7 | EVENASPH | 44.11565 | 11.44181 | | 29.85398 | 30.9888 | 0.3912324 | -8.45237E-07 | -9.6799E-08 |
| 8 | STANDARD | Infinity | 0.45 | BK7 | 25.29196 | 25.3127 | 0 | | |
| 9 | STANDARD | Infinity | 0.0998032 | | 25.3127 | 25.3127 | 0 | | |
| IMA | STANDARD | Infinity | | | 25.12605 | 25.12605 | 0 | | |

The performance of the optical system of the second embodiment of the present disclosure is demonstrated by the following parameters.

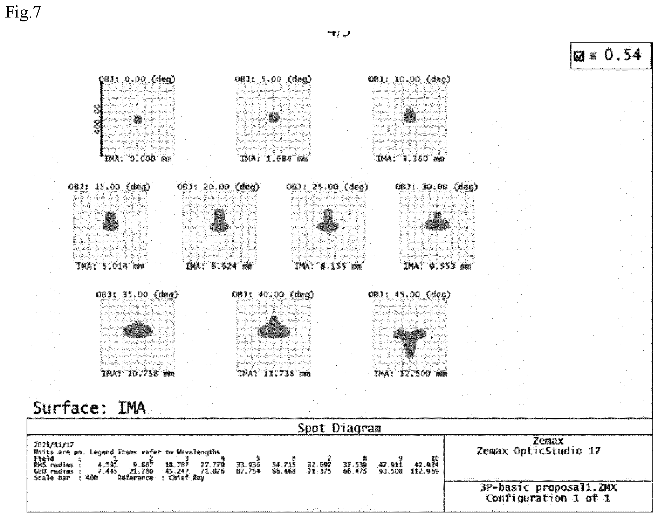

As shown in FIG. 7, the maximum spot size is at the position of the maximum field of view (0.9F), and its maximum value is less than 48$\mu$m. This value is relatively small, which is conducive to improving the imaging quality.

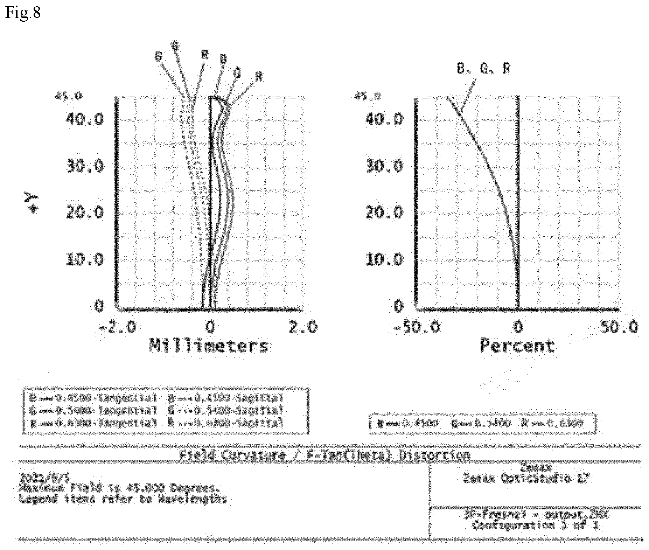

As shown in FIG. 8, the field curvatures of RGB wavelengths in T and S directions are less than 0.5mm, and the maximum distortion is at the position of the maximum field of view and is less than 35%.

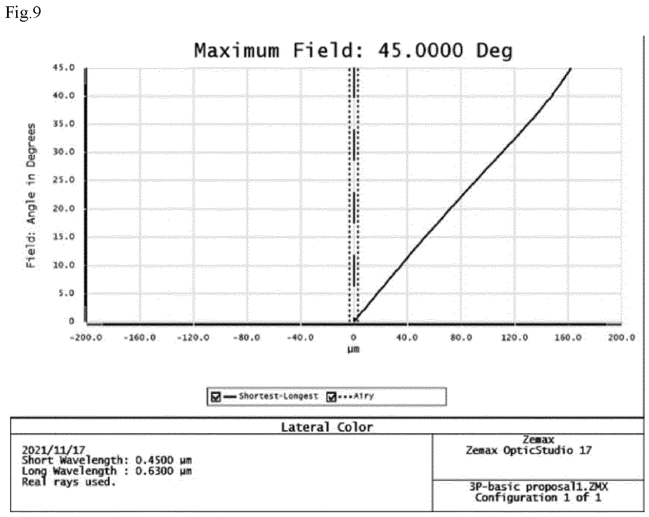

As shown in FIG. 9, the maximum dispersion of RGB is at the position of the maximum field of view, the whole RGB is 450nm to 610nm, and the LCA is 170nm.

The embodiments of the present disclosure provide a short-focus, high-resolution direct transmission optical system, which does not involve a folded optical path.

(1) A three-piece lens group (3P structure) is formed by combining two positive lenses and one negative lens. The shapes of the two positive lenses are optimized, the aspherical surface + Fresnel surface are designed, and the two Fresnel surfaces are arranged adjacent to each other, and thus ultra-short-focus can be realized.

(2) In the lens group, the combination of two positive lenses and one negative lens also realizes the effects of high resolution and low dispersion.

(3) Through the selection and cooperation of materials having different refractive indexes and Abbe numbers, it facilitates realizing low dispersion of the optical path.

(4) The whole optical system is a direct transmission optical structure, and its processing cost and difficulty are relatively low.

According to another aspect of the present disclosure, a head mounted display is provided.

The head mounted display comprises an optical system as described above.

The head mounted display is, for example, a VR device.

The description of the above embodiments focuses on the differences between various embodiments. As long as the different optimized features between the embodiments are not contradictory to each other, they can be combined to form a better embodiment, which will not be repeated herein for simplicity of the description.

## Claims

1.  An optical system, comprising:

    a lens group comprising a third lens (4), a second lens (3) and a first lens (2) arranged successively along a propagation direction of incident light;

    the first lens (2) comprises a first surface (21) and a second surface (22), the second lens (3) comprises a third surface (31) and a fourth surface (32), the second surface (22) and the third surface (31) are arranged adjacent to each other, and are both Fresnel surfaces, the third lens (4) comprises a fifth surface (41) and a sixth surface (42), the fifth surface (41) and the fourth surface (32) are arranged adjacent to each other,

    the first surface (21) is a convex surface, the fourth surface (32) is a convex surface, at least one of the fifth surface (41) and the sixth surface (42) is a concave surface,

    the optical system has an imaging spot size less than 50$\mu$m, and the spot size is all less than two display pixels,

    the absolute value of the radius R1 of the first surface (21) satisfies $35mm \leq R1 \leq 65mm$; the absolute value of the radius R2 of the second surface (22) satisfies $20mm \leq R2 \leq 40mm$,

    the absolute value of the radius R3 of the third surface (31) satisfies $20mm \leq R3 \leq 40mm$; the absolute value of the radius R4 of the fourth surface (32) satisfies $30mm \leq R4 \leq 60mm$,

    the absolute value of the radius R5 of the fifth surface (41) satisfies $R5 \geq 30mm$; the absolute value of R6 of radius on the sixth surface (42) satisfies $30mm \leq R6 \leq 60mm$,

    an effective focal length f1 of the first lens (2) is $20mm \leq f1 \leq 40mm$;

    an effective focal length f2 of the second lens (3) is $20mm \leq f2 \leq 40mm$;

    an effective focal length f3 of the third lens (4) is $-75mm \leq f3 \leq -35mm$,

    a first spacing (T1) is provided between the first lens (2) and the second lens (3);

    a second spacing (T2) is provided between the third lens (4) and the second lens (3), and the second spacing (T2) is greater than the first spacing (T1), and a third spacing (T3) is provided between the third lens (4) and the display screen (1); and

    the first lens (2), the second lens (3) and the third lens (4) are located on a same optical axis,

    the first spacing T1 is set to $0.2mm \leq T1 \leq 1mm$, the second spacing T2 is set to $1mm \leq T2 \leq 3mm$, the third spacing T3 is set to $5mm \leq T3 \leq 15mm$,

the thickness h1 at the center of the first lens (2) is 2mm ≤ h1 ≤ 4mm; the thickness h2 at the center of the second lens (3) is 3mm ≤ h2 ≤ 5mm; the thickness h3 at the center of the third lens (4) is 2mm ≤ h3 ≤ 4mm.

2. The optical system according to claim 1, wherein the first lens (2) and the second lens (3) are made of a same material, and are made of a COP material; and
the third lens (4) is made of an OKP material or an EP material.

3. The optical system according to claim 1, wherein
an effective focal length f of the lens group is 15mm ≤ f ≤ 25mm.

4. A head mounted display comprising the optical system according to any one of claims 1-3.


**Patentansprüche**

1. Ein optisches System, umfassend:

eine Linsengruppe umfassend eine dritte Linse (4), eine zweite Linse (3) und eine erste Linse (2), die entlang einer Ausbreitungsrichtung eines einfallenden Lichts hintereinander angeordnet sind;
wobei die erste Linse (2) eine erste Fläche (21) und eine zweite Fläche (22) umfasst, die zweite Linse (3) eine dritte Fläche (31) und eine vierte Fläche (32) aufweist, die zweite Fläche (22) und die dritte Fläche (31) nebeneinander angeordnet sind und beide Fresnelflächen sind, die dritte Linse (4) eine fünfte Fläche (41) und eine sechste Fläche (42) aufweist, die fünfte Fläche (41) und die vierte Fläche (32) nebeneinander angeordnet sind,
die erste Fläche (21) ist eine konvexe Fläche, die vierte Fläche (32) ist eine konvexe Fläche, mindestens eine der fünften Fläche (41) und der sechsten Fläche (42) ist eine konkave Fläche,
das optische System hat eine Bildpunktgröße von weniger als 50 μm, und die Punktgröße beträgt weniger als zwei Anzeigepixel,
der absolute Wert des Radius R1 der ersten Fläche (21) erfüllt 35 mm ≤ R1 ≤ 65 mm; der absolute Wert des Radius R2 der zweiten Fläche (22) erfüllt 20 mm ≤ R2 ≤ 40 mm,
der absolute Wert des Radius R3 der dritten Fläche (31) erfüllt 20 mm ≤ R3 ≤ 40 mm; der absolute Wert des Radius R4 der vierten Fläche (32) erfüllt 30 mm ≤ R4 ≤ 60 mm,
der absolute Wert des Radius R5 der fünften Fläche (41) erfüllt R5 ≥ 30 mm, der absolute Wert des Radius R6 der sechsten Fläche (42) erfüllt 30 mm ≤ R6 ≤ 60 mm,
eine effektive Brennweite f1 der ersten Linse (2) beträgt 20 mm ≤ f1 ≤ 40 mm;
eine effektive Brennweite f2 der zweiten Linse (3) beträgt 20 mm ≤ f2 ≤ 40 mm;
eine effektive Brennweite f3 der dritten Linse (4) ist -75 mm ≤ f3 ≤ -35 mm,
ein erster Abstand (T1) zwischen der ersten Linse (2) und der zweiten Linse (3) vorgesehen ist;
ein zweiter Abstand (T2) zwischen der dritten Linse (4) und der zweiten Linse (3) vorgesehen ist, und der zweite Abstand (T2) größer als der erste Abstand (T1) ist, und ein dritter Abstand (T3) zwischen der dritten Linse (4) und dem Anzeigeschirm (1) vorgesehen ist; und
die erste Linse (2), die zweite Linse (3) und die dritte Linse (4) auf einer gemeinsamen optischen Achse liegen, der erste Abstand T1 ist auf 0,2 mm ≤ T1 ≤ 1 mm eingestellt, der zweite Abstand T2 ist auf 1 mm ≤ T2 ≤ 3 mm eingestellt, der dritte Abstand T3 ist auf 5 mm ≤ T3 ≤ 15 mm eingestellt,
die Dicke h1 in der Mitte der ersten Linse (2) beträgt 2 mm ≤ h1 ≤ 4 mm; die Dicke h2 in der Mitte der zweiten Linse (3) beträgt 3 mm ≤ h2 ≤ 5 mm; die Dicke h3 in der Mitte der dritten Linse (4) beträgt 2 mm ≤ h3 ≤ 4 mm.

2. Optisches System nach Anspruch 1, wobei die erste Linse (2) und die zweite Linse (3) aus demselben Material hergestellt sind und aus einem COP-Material hergestellt sind; und
die dritte Linse (4) ist aus einem OKP- oder EP-Material hergestellt.

3. Optisches System nach Anspruch 1, wobei
eine effektive Brennweite f der Linsengruppe ist 15 mm ≤ f ≤ 25 mm.

4. Kopfmontierte Anzeige, die das optische System nach einem der Ansprüche 1 bis 3 umfasst.

**Revendications**

1. Système optique, comprenant :

   un groupe de lentilles comprenant une troisième lentille (4), une deuxième lentille (3) et une première lentille (2) agencées successivement le long d'une direction de propagation de lumière incidente ;
   la première lentille (2) comprend une première surface (21) et une deuxième surface (22), la deuxième lentille (3) comprend une troisième surface (31) et une quatrième surface (32), la deuxième surface (22) et la troisième surface (31) sont agencées adjacentes l'une à l'autre, et sont toutes deux des surfaces de Fresnel, la troisième lentille (4) comprend une cinquième surface (41) et une sixième surface (42), la cinquième surface (41) et la quatrième surface (32) sont agencées adjacentes l'une à l'autre,
   la première surface (21) est une surface convexe, la quatrième surface (32) est une surface convexe, au moins une de la cinquième surface (41) et de la sixième surface (42) est une surface concave,
   le système optique présente une taille de point lumineux d'imagerie inférieure à 50 $\mu$m, et la taille de point lumineux est inférieure à deux pixels d'affichage,
   la valeur absolue du rayon R1 de la première surface (21) satisfait 35 mm $\leq$ R1 $\leq$ 65 mm ;
   la valeur absolue du rayon R2 de la deuxième surface (22) satisfait 20 mm $\leq$ R2 $\leq$ 40 mm,
   la valeur absolue du rayon R3 de la troisième surface (31) satisfait 20 mm $\leq$ R3 $\leq$ 40 mm ;
   la valeur absolue du rayon R4 de la quatrième surface (32) satisfait 30 mm $\leq$ R4 $\leq$ 60 mm,
   la valeur absolue du rayon R5 de la cinquième surface (41) satisfait R5 $\geq$ 30 mm ;
   la valeur absolue du rayon R6 sur la sixième surface (42) satisfait 30 mm $\leq$ R6 $\leq$ 60 mm,
   une longueur focale effective f1 de la première lentille (2) est de 20 mm $\leq$ f1 $\leq$ 40 mm ;
   une longueur focale effective f2 de la deuxième lentille (3) est de 20 mm $\leq$ f2 $\leq$ 40 mm ; et
   une longueur focale effective f3 de la troisième lentille (4) est de -75 mm $\leq$ f3 $\leq$ -35 mm,
   un premier espacement (T1) est prévu entre la première lentille (2) et la deuxième lentille (3) ;
   un deuxième espacement (T2) est prévu entre la troisième lentille (4) et la deuxième lentille (3), et
   le deuxième espacement (T2) est supérieur au premier espacement (T1), et un troisième espacement (T3) est prévu entre la troisième lentille (4) et l'écran d'affichage (1) ; et
   la première lentille (2), la deuxième lentille (3) et la troisième lentille (4) sont situées sur un même axe optique,
   le premier espacement T1 est défini à 0,2 mm $\leq$ T1 $\leq$ 1 mm, le deuxième espacement T2 est défini à 1 mm $\leq$ T2 $\leq$ 3 mm, le troisième espacement T3 est défini à 5 mm $\leq$ T3 $\leq$ 15 mm,
   l'épaisseur h1 au niveau du centre de la première lentille (2) est de 2 mm $\leq$ h1 $\leq$ 4 mm ; l'épaisseur h2 au niveau du centre de la deuxième lentille (3) est de 3 mm $\leq$ h2 $\leq$ 5 mm ; l'épaisseur h3 au niveau du centre de la troisième lentille (4) est de 2 mm $\leq$ h3 $\leq$ 4 mm.

2. Système optique selon la revendication 1, dans lequel la première lentille (1) et la deuxième lentille (3) sont constituées d'un même matériau, et sont constituées d'un matériau COP ; et
   la troisième lentille (4) est constituée d'un matériau OKP ou d'un matériau EP.

3. Système optique selon la revendication 1, dans lequel la longueur focale effective f du groupe de lentilles est de 15 mm $\leq$ f $\leq$ 25 mm.

4. Affichage monté sur la tête comprenant le système optique selon l'une quelconque des revendications 1 à 3.

Fig.1

Fig.2

Fig.3

Fig.4

Fig.5

Fig.6

Fig.7

Fig.8

Fig.9

**EP 4 212 943 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111446819